# EUROPEAN PATENT APPLICATION

(11) **EP 2 500 845 A2**
(43) Date of publication of application: **19.09.2012**
(21) Application number: 12157705.0
(22) Date of filing: 01.03.2012
(51) Int. Cl.: G06K 19/07

(54) **Portable electronic apparatus**

(30) Priority: 14.03.2011 JP 2011055801; 22.09.2011 JP 2011207443
(71) Applicant: Kabushiki Kaisha Toshiba, Tokyo 105-8001 (JP)
(72) Inventor: Nozaki, Masahiro, Tokyo, 105-8001 (JP)
(74) Representative: HOFFMANN EITLE

(57) **Abstract**

According to one embodiment, a portable electronic apparatus includes, a portable electronic apparatus configured to operate in response to command input from an external apparatus, the electronic apparatus includes, a receiving module (23) configured to receive a command input from the external apparatus, a reception register (23a) configured to temporarily store the command received by the receiving module, a first storage module (27a) configured to determine whether the receiving module has received the command normally, and to store the command as reception data if the command is found to have been received normally, a command processing module (24) configured to process based on the command stored in the reception register, thereby to generate a response, a transmission register (23b) configured to temporarily store the response which transmits to the external apparatus generated by the command processing module, a transmitting module (23) configured to transmit the response stored in the transmission register, to the external apparatus, and a second storage module (27b) configured to determine whether the transmitting module has transmitted the response normally, and to store the response as transmission data if the response is found to have been transmitted normally.

## Description

### FIELD

Embodiments described herein relate generally to a portable electronic apparatus.

### BACKGROUND

Each of most IC cards used as portable electronic apparatuses comprises a card-shaped main unit and an IC module. The main unit is made of, for example, plastic material. The IC module is embedded in the main unit. The IC module has an IC chip. The IC chip has a nonvolatile memory and a CPU. The nonvolatile memory can keep holding data if not connected to a power supply, and is, for example, an electrically erasable programmable read-only memory (EEPROM) or a flash read-only memory (ROM). The CPU is configured to perform various operations.

The IC card accords with, for example, the International Standard ISO/IEC7816. The IC card excels in portability and can communicate with external apparatuses and can perform complex operations. Further, the IC card can hardly be forged. Therefore, it may store highly confidential information, and may therefore be used with security systems and in electronic commercial transactions.

In recent years, the CI chip for use in IC cards have been sophisticated, acquiring higher performance, and IC cards have been put to practical use, each of which can execute various applications stored in the IC chip incorporated in it. The IC card receives commands from a terminal apparatus having a dedicated reader/writer, and executes the applications in accordance with the commands it has received. Therefore, the IC card can perform various operations. The IC card generates a response on the basis of the results of operating the applications, and transmits the response to the terminal apparatus.

The terminal apparatus can determine the state of the IC card from the response it has received from the IC card. Further, if the terminal apparatus receives no responses after it has transmitted any command to the IC card, it determines that an error has occurred. In such a case, however, the terminal apparatus cannot determine whether the command transmitted to the IC card has reached the IC card. Nor can the terminal determine whether the IC card has transmitted a response. Consequently, the conventional IC card can hardly specify the cause of the error.

### BRIEF DESCRIPTION OF THE DRAWINGS

FIG. 1 is an exemplary view for explaining an IC card processing system according to one embodiment;
FIG. 2 is an exemplary view for explaining an IC card according to the embodiment;
FIG. 3 is an exemplary view for explaining process performed in the IC card system according to the embodiment;
FIG. 4 is an exemplary view for explaining process performed in the IC card according to the embodiment;
FIG. 5 is an exemplary view for explaining process performed in the IC card system according to the embodiment;
FIG. 6 is an exemplary view for explaining process performed in the IC card system according to the embodiment;
FIG. 7 is an exemplary view for explaining process performed in the IC card according to the embodiment;
FIG. 8 is an exemplary view for explaining process performed in the IC card system according to the embodiment;
FIG. 9 is an exemplary view for explaining process performed in the IC card according to the embodiment;
FIG. 10 is an exemplary view for explaining the IC card according to the embodiment;
FIG. 11 is an exemplary view for explaining process performed in the IC card processing system according to the embodiment;
FIG. 12 is an exemplary view for explaining process performed in the IC card processing system according to the embodiment; and
FIG. 13 is an exemplary view for explaining process performed in the IC card processing system according to the embodiment.

### DETAILED DESCRIPTION

Various embodiments will be described hereinafter with reference to the accompanying drawings. In general, according to one embodiment, a portable electronic apparatus configured to operate in response to command input from an external apparatus, the electronic apparatus comprises, a receiving module configured to receive a command input from the external apparatus, a reception register configured to temporarily store the command received by the receiving module, a first storage module configured to determine whether the receiving module has received the command normally, and to store the command as reception data if the command is found to have been received normally, a command processing module configured to process based on the command stored in the reception register, thereby to generate a response, a transmission register configured to temporarily store the response which transmits to the external apparatus generated by the command processing module, a transmitting module configured to transmit the response stored in the transmission register, to the external apparatus, and a second storage module configure to determine whether the transmitting module has transmitted the response normally, and to store the response as transmission data if the response is found to have been transmitted normally.

A portable electronic apparatus according to one embodiment and the processing system of the portable electronic apparatus will be described in detail, with reference to the accompanying drawings.

The terminal apparatus 10 according to the embodiment has a card reader/writer 17 and an IC card 20. The card reader/writer 17 and IC card 20 have a contact communication function defined in, for example, ETSI TS 102 613 or a non-contact communication function defined in, for example, ISO/IEC14443, or both communication functions. The card reader/writer 17 and the IC card 20 can therefore transmit and receive data to and from each other.

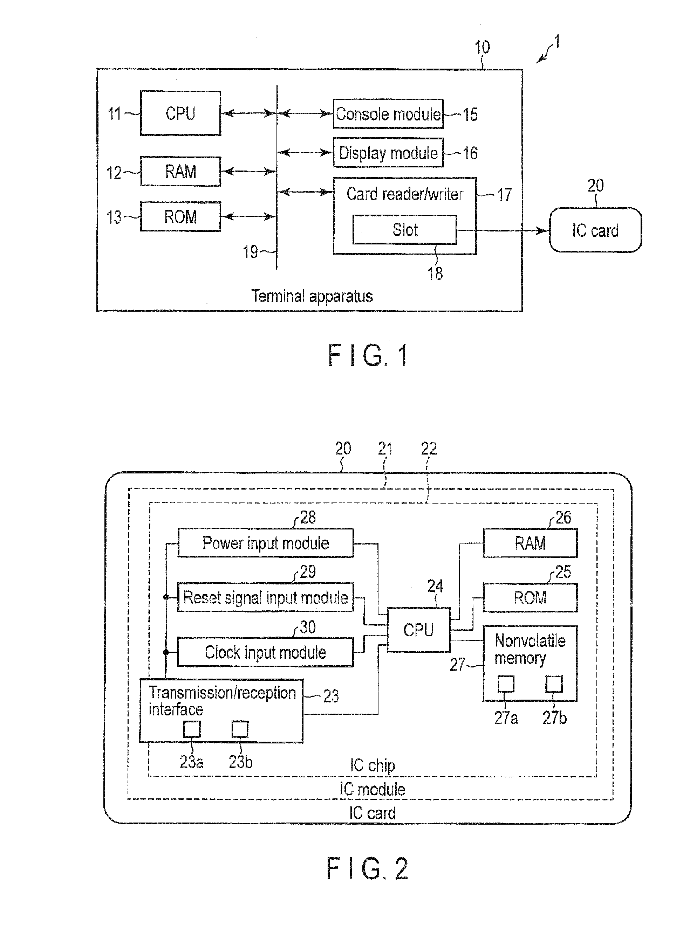

FIG. 1 shows an exemplary configuration of the IC card processing system 1 according to one embodiment.

The IC card processing system 1 comprises a terminal apparatus 10, an IC card (i.e., portable electronic apparatus) 20. The terminal apparatus 10 is configured to process data stored in the IC card 20. The terminal apparatus 10 and the IC card 20 transmit and receive various data to and from each other, through contact or non-contact communication as described above. The embodiment will be explained on the assumption that the terminal apparatus 10 and the IC card 20 exchange data through the non-contact communication.

The terminal apparatus 10 comprise a CPU 11, a RAM 12, a ROM 13, a console module 15, a display module 16, and a card reader/writer 17. The CPU 11, RAM 12, ROM 13, console module 15, display module 16 and card reader/writer 17 are connected to one another by a bus 19.

The CPU 11 functions as control module that controls the other components of the terminal apparatus 10. The CPU 11 performs various processes in accordance with the control programs and control data, all stored in the ROM 13. For example, it transmits and receives commands and responses to and from the IC card 20 through the card reader/writer 17.

The RAM 12 is a volatile memory that functions as a working memory. The RAM 12 temporarily stores the data the CPU 11 is processing. Further, the RAM 12 temporarily stores, for example, the data to transmit and receive to and from an external apparatus through the card reader/writer 17. Still further, the RAM 12 temporarily stores the data that the CPU 11 will execute. The ROM 13 is a nonvolatile memory storing control programs, control data, etc.

The console module 15 has, for example, operation keys. As the user operates the operation keys, the console module 15 generates operation signals. The operation signals, thus generated, are input to the CPU 11.

The display module 16 is configured to display various pieces of information in accordance with the display signals input from a graphics processing module that the CPU 11 controls. The terminal apparatus 10 may have a touch panel in which the console module 15 and the display module 16 are integrated.

The card reader/writer 17 is an interface device that achieves communication with the IC card 20. The card reader/writer 17 has a slot 18, in which the IC card 20 is inserted. The card reader/writer 17 further has a plurality of contact terminals that may be connected to the contact pattern provided in the IC card 20.

When the IC card 20 is inserted into the slot 18, the contact terminals of the card reader/writer 17 are connected to the contact pattern provided in the IC card 20. The IC card 20 is thereby electrically connected to the terminal apparatus 10. The card reader/writer 17 can then supply power, a clock signal and a clock signal to, and can transmit and receive data to and from, the IC card 20 inserted in the slot 18.

The CPU 11 controls the card reader/writer 17, causing the same to input various commands to the IC card 20. On receiving the commands, the IC card 20 performs the process of writing the data it has received, in the nonvolatile memory incorporated in it.

The CPU 11 further transmits a read command to the IC card 20, reading the data from the IC card 20. The CPU 11 also performs various processes in accordance with the data it has received from the IC card 20.

FIG. 2 shows an exemplary configuration of the IC card 20;

As shown in FIG. 2, the IC card 20 comprises a card-shaped main unit and an IC module 21 incorporated in the main unit. The IC module 21 comprises an IC chip 22.

The IC chip 22 comprises a transmission/reception interface 23, a CPU 24, a ROM 25, a RAM 26, a nonvolatile memory 27, a power input module 28, a reset signal input module 29, and a clock input module 30.

The transmission/reception interface 23 encodes, decodes, modulates and demodulates the data to transmit to, and the data received from, an external apparatus (e.g., terminal apparatus 10) connected to the IC card 20.

The IC card 20 may be configured to transmit and receive data to and from the terminal apparatus 10 through contact communication. If this is the case, the transmission/reception interface 23 has a contact pattern. The contact pattern is composed of contact terminals made of electrically conductive metal and formed on the surface of the IC module 21. That is, the contact pattern is so formed as to contact the terminal apparatus 10. More precisely, the contact pattern is defined by metal strips, provided in different areas and functioning as terminals.

The transmission/reception interface 23 comprises a reception register 23a and a transmission register 23b. The reception register 23a and transmission register 23b are registers of ordinary type, temporarily storing data the IC card 20 has received and will transmit. More specifically, the reception register 23a temporarily store the data the IC card 20 has received, and the transmission register 23b temporarily stores the data the IC card 20 should transmit.

The CPU 24 controls the other components of the IC card 20. Further, the CPU 24 performs various processes in accordance with the control programs and control data, all stored in the ROM 25 or the nonvolatile memory 27. For example, the CPU 24 performs various processes in accordance with commands received from the card reader/writer 17 of the terminal apparatus 10, and regenerates a response on the basis of the results of the processes it has performed.

The ROM 25 is a nonvolatile memory storing control programs, control data, etc. During the manufacture of the IC card 20, the control programs, control data, etc. were written into the ROM 25, and the Rom 25 was incorporated into the IC card 20. That is, the control programs and the control data stored have been stored into the ROM 25 in accordance with the specification of the IC card 20.

The RAM 26 is a volatile memory that functions as a working memory. The RAM 26 temporarily stores the data the CPU 24 is processing. Further, the RAM 26 temporarily stores, for example, the programs will execute. The ROM 13 is a nonvolatile memory storing control programs, control data, etc.

The nonvolatile memory 27 is constituted by a nonvolatile memory such as an EEPROM or a flash ROM. The nonvolatile memory 27 stores control programs and various data that the IC card 20 uses to perform its function.

In the nonvolatile memory 27, for example, a program file, a data file, etc. are generated. In each file, control programs and various data are written. The CPU 24 can execute the programs stored in the ROM 25, thereby to perform various processes.

The nonvolatile memory 27 has a reception data storage area 27a and a transmission data storage area 27b. The reception data storage area 27a and transmission data storage area 27b are storage areas for holding data.

On receiving a command from the terminal apparatus 10 via the transmission/reception interface 23, the CPU 24 determines whether the command coming from the terminal apparatus 10 has been normally received or not. If the command coming from the terminal apparatus 10 is found normally received, the CPU 24 stores the command as received data in the reception data storage area 27a.

To be more specific, if the CPU 24 determines that that the command has been normally received, it copies the command stored in the reception register 23a, in the reception data storage area 27a.

If the transmission/reception interface 23 transmits a response to the terminal apparatus 10, the CPU 24 determines whether the response has been normally transmitted. If the response is found normally transmitted, the CPU 24 stores the response as transmission data in the transmission data storage area 27b.

More precisely, if the response is found normally transmitted, the CPU 24 copies the response stored in the transmission register 23b, in the transmission data storage area 27b.

In order to store data in the reception data storage area 27a or transmission data storage area 27b, the CPU 24 writes the data over the data already stored in the reception data storage area 27a or transmission data storage area 27b. That is, the latest command and the latest response are stored in the reception data storage area 27a and the transmission data storage area 27b, respectively. As a result, the terminal apparatus 10 can determine whether the IC card 20 has normally processed, from the data stored in the reception data storage area 27a, and can determine whether the IC card 10 has normally transmitted the response, from the data stored in the transmission data storage area 27b.

The power input module 28 receives power from the card reader/writer 17 via the transmission/reception interface 23, and supplies the power to the other components of the IC card 20.

The reset signal input module 29 receives a reset signal from the card reader/writer 17 via the transmission/reception interface 23, and supplies the reset signal to the CPU 24.

The clock input module 30 receives a clock signal from the card reader/writer 17 via the transmission/reception interface 23, and supplies the clock signal to the other components of the IC card 20.

The card reader/writer 17 has, for example, an antenna. The antenna serves to accomplish data communication between it and the IC card 20. The card reader/writer 17 makes the antenna generate a magnetic field, in accordance with the command to transmit to the IC card 20.

The card reader/writer 17 of the terminal apparatus 10 and the IC card 20 may need to exchange data by means of non-contact communication. In this case, the transmission/reception interface 23 has an antenna. The antenna is a metal wires formed in a prescribed pattern and provided in the IC module 21. The antenna has a specific resonance frequency that is determined by the pattern of the metal wire. The antenna can detect the magnetic field applied to it.

The transmission/reception interface 23 generates a command from the magnetic field the antenna has detected. That is, the transmission/reception interface 23 acquires, at the antenna, the command transmitted from the card reader/writer 17 of the terminal apparatus 10. The CPU 24 of the IC card 20 performs a process in accordance with the command acquired at the interface 23, and generates a response. In accordance with the response, the transmission/reception interface 23 generates a magnetic field.

The card reader/writer 17 detects the magnetic field at the antenna, acquiring a response in accordance with the magnetic field detected.

If the IC card 20 needs to exchange data with the card reader/writer 17 of the terminal apparatus 10, the power input module 28 generates power from the electric wave transmitted to the card reader/writer 17, particularly from the carrier wave. Further, the power input module 28 generates an operating clock signal. The power input module 28 supplies the power and the operating clock signal to the other components of the IC card 20.

The relation between the process the IC card processing system 1 has with the data stored in the reception data storage area 27a and transmission data storage area 27b of the IC card 20 will be explained below.

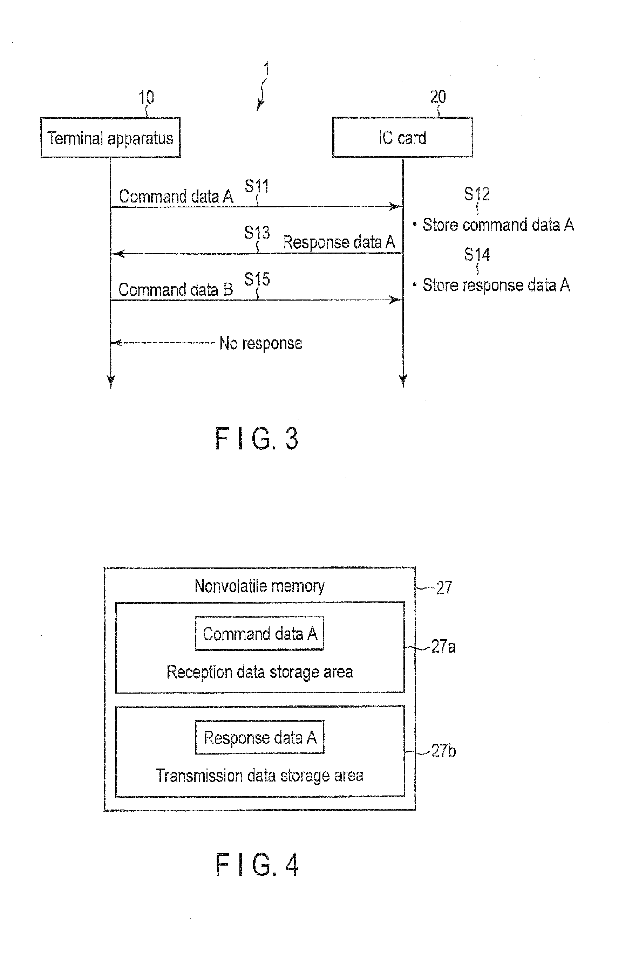

FIG. 3 shows an exemplary process performed in the IC card processing system 1. FIG. 4 shows an exemplary process performed in the IC card 20.

Once the IC card 20 has been inserted into the slot 18 of the card reader/writer 17, the terminal apparatus 10 supplies power to the IC card 20 through the card reader/writer 17. The IC card 20 is thereby activated to operate.

The terminal apparatus 10 transmits "command data A" to the IC card 20 (Step S11). In the IC card 20, the transmission/reception interface 23 receives the "command data A" transmitted from the terminal apparatus 10. The "command data A" Is stored in the reception register 23a.

The CPU 24 of the IC card 20 determines whether the "command data A" transmitted from the terminal apparatus 10 has been normally received or not. If the "command data A" is found normally received, the CPU 24 stores the "command data A" in the reception data storage area 27a (Step S12).

The CPU 24 processes the "command data A" received, thereby generating "response data A." The CPU 24 stores the "command data A" in the transmission register 23b. The transmission/reception interface 23 transmits the "response data A" stored in the transmission register 23b, to the terminal apparatus 10 (Step S13).

The CPU 24 determines whether the "response data A" has been normally transmitted or not. If the "response data A" is found normally transmitted, the CPU 24 stores the "response data A" in the transmission data storage area 27b (Step S14). As a result, the nonvolatile memory 27 stores the "command data A" and "response data A" in the reception data storage area 27a and transmission data storage area 27b, respectively, as is shown in FIG. 4.

The terminal apparatus 10 receives the "response data A" transmitted from the IC card 20. From the "response data A," the terminal apparatus 10 determines the state of the IC card 20. More precisely, if the "response data A" shows that the data has been normally processed, the terminal apparatus 10 will determines that the IC card 20 has normally processed the data on the basis of the "command data A."

Next, the terminal apparatus 10 transmits "command data B" to the IC card (Step S15).

Assume that the IC card 20 cannot normally receive the "command data B" transmitted from the terminal apparatus 10. Then, the IC card 20 performs no processes on the basis of the "command data B." As a result, the IC card 20 does not generate "response data B" in response to the "command data B." The terminal apparatus 10 is therefore unable to receive any response from the IC card 10.

The terminal apparatus 10 may receive no responses within a prescribed time after transmitting the command to the IC card 20. In this case, the terminal apparatus 10 determines that an error has occurred in the IC card 20.

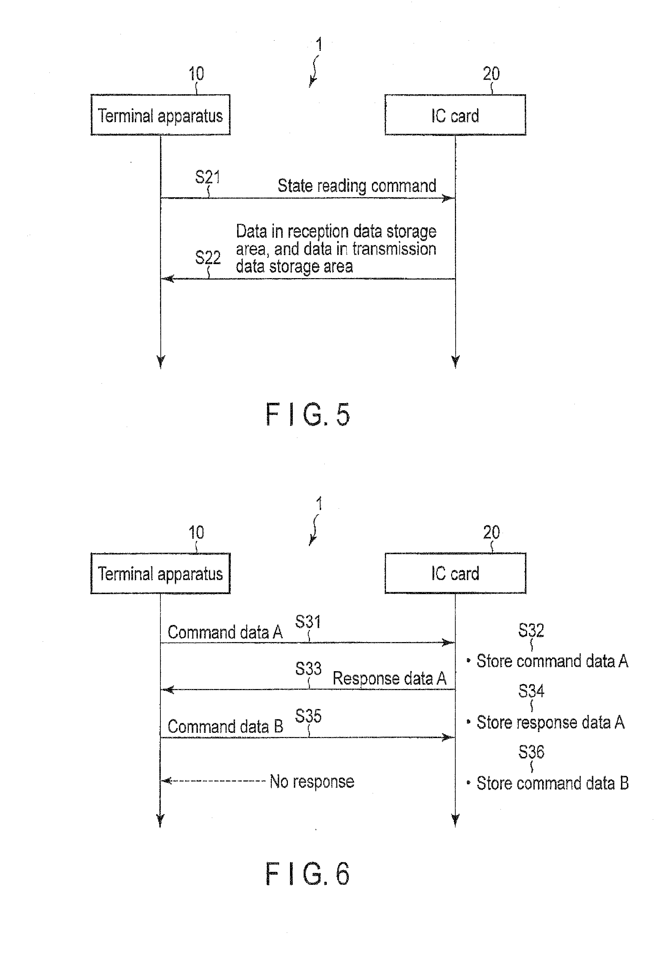

FIG. 5 shows an exemplary process performed in the IC card system 1.

If an error is found to have occurred, the terminal apparatus 10 transmits a command (state reading command) to the IC card 20, to read the data stored in the reception data storage area 27a and transmission data storage area 27b (Step S21).

When the IC card 10 receives the state reading command from the terminal apparatus 10, the data is read from the reception data storage area 27a and transmission data storage area 27b. The IC card 10 generates a response (in response to the state reading command) that contains the data thus read. The IC card 20 transmits the response to the terminal apparatus 10 (Step S22).

The terminal apparatus 10 determines the state of the IC card 20, from the response the IC card 20 has transmitted in response to the state reading command. Assume that the reception data storage area 27a and transmission data storage area 27b may store "command data A" and "response data A," respectively, as shown in FIG. 4. Then, the terminal apparatus 10 determines that the "command data B" transmitted toward the IC card 20 has not reached the IC card 20. In this case, the terminal apparatus 10 determines that a reception error has occurred in the IC card 20 or that the data transmitted from the terminal apparatus 10 has been erased by, for example, noise.

In other words, if the last command transmitted toward the IC card 20 is not stored in the reception data storage area 27a, the terminal apparatus 10 can determine that this command has not reached the IC card 20 at all.

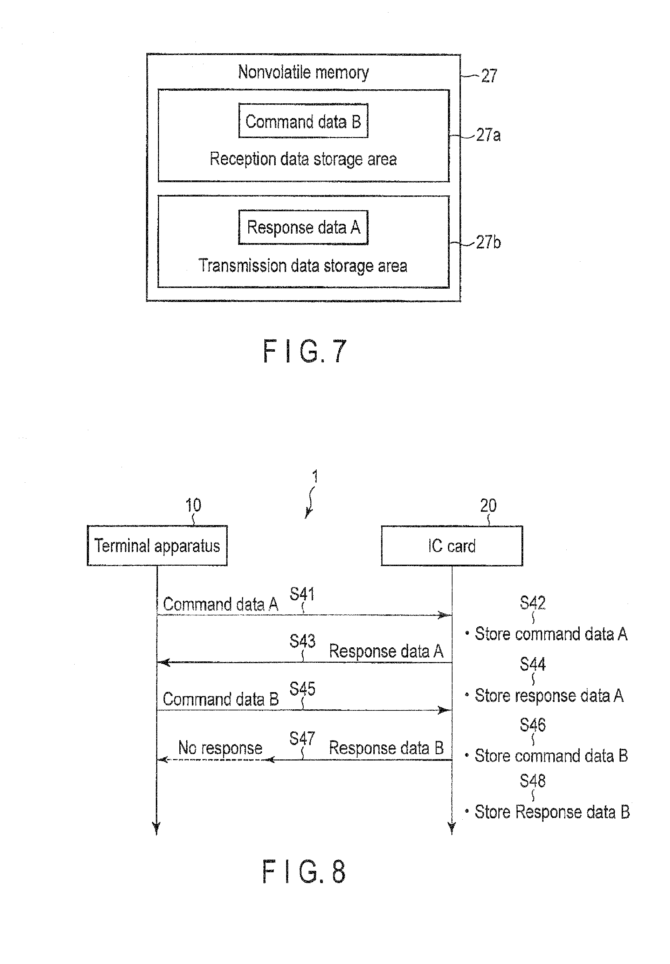

FIG. 6 shows an exemplary process performed in the IC card system 1. FIG. 7 shows an exemplary process performed in the IC card 20. Note that Steps S31 to S35 shown in FIG. 6 are similar to Steps S11 to S15 shown in FIG. 3, and will not be explained in detail.

First, the terminal apparatus 10 transmits "command data A" toward the IC card 20 (Step S31).

If the "command data A" transmitted from the terminal apparatus 10 is found normally received in the IC card 20, the CPU 24 stores the "command data A" in the reception data storage area 27a (Step S32).

The CPU 24 then process data in accordance with the "command data A" received generating "response data A." The transmission/reception interface 23 transmits the "response data A" to the terminal apparatus 10 (Step S33).

If the "response data A" is found normally transmitted, the CPU 24 stores the "response data A" in the transmission data storage area 27b (Step S34).

The terminal apparatus 10 receives the "response data A" transmitted from the IC card 20. The terminal apparatus 10 then transmits "command data B" to the IC card 20 (Step S35). In the IC card 20, the transmission/reception interface 23 receives the "command data B" transmitted from the terminal apparatus 10. The "command data B" is stored in the reception register 23a.

The CPU 24 of the IC card 20 determines whether the "command data B" transmitted from the terminal apparatus 10 has been normally received or not. If the "command data B" is found normally received, the CPU 24 stores the "command data B" in the reception data storage area 27a (Step S36).

In this case, the CPU 24 writes the "command data B" over the "command data A" stored in the reception data storage area 27a. As a result, the reception data storage area 27a and transmission data storage area 27b of the nonvolatile memory 27 hold the "command data B" and the "response data A," respectively, as is shown in FIG. 7.

Assume that the IC card 20 fails to process the command normally on the basis of the "command data B." Then, the IC card 20 generates no "response data B" for the "command data B." Therefore, the terminal apparatus 10 cannot receive any response from the IC card 20. Also in this case, the terminal apparatus 10 determines that an error has occurred in the IC card 20.

As described above, the terminal apparatus 10 transmits a state reading command to the IC card 20, reading the data stored in the reception data storage area 27a and transmission data storage area 27b of the IC card 20.

The terminal apparatus 10 determines the state of the IC card 20, from the data stored in the reception data storage area 27a and transmission data storage area 27b. The reception data storage area 27a may hold the "command data B," and the transmission data storage area 27b may hold the "response data A" as shown in FIG. 7. In this case, the terminal apparatus 10 determines that no command process has been performed on the basis of the "command data B" or that the IC card 20 has not normally transmitted a response.

That is, if the last command transmitted to the IC card 20 is stored in the reception data storage area 27a and if the response to the last command transmitted to the IC card 20 is not stored in the transmission data storage area 27b, the terminal apparatus 10 can determine that the IC card 20 has not performed a command process based on the "command data B" or the IC card 20 has not normally transmitted a response.

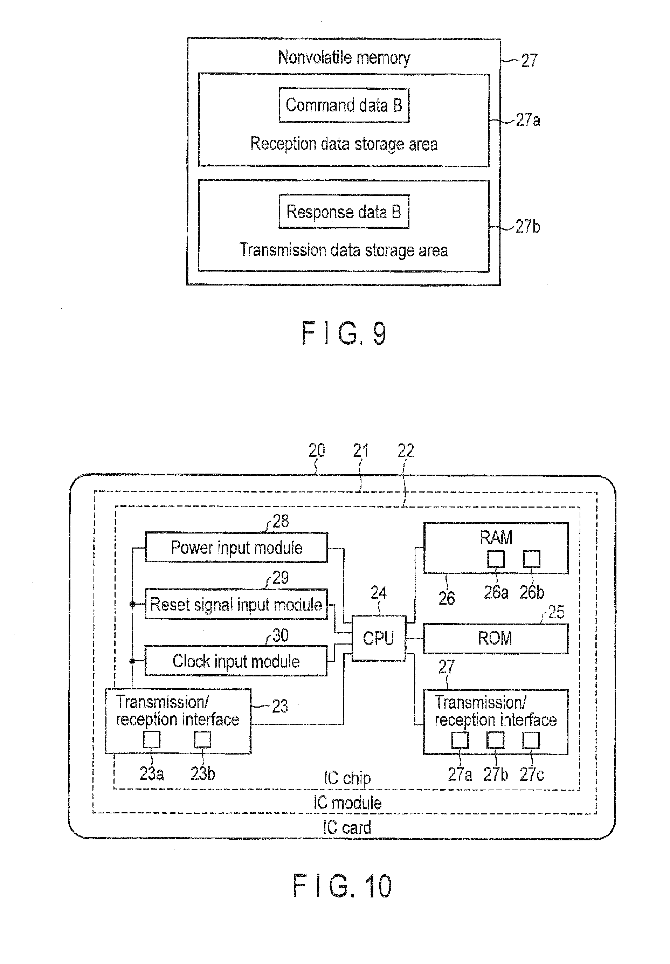

FIG. 8 shows an exemplary process performed in the IC card system 1. FIG. 9 shows an exemplary process performed in the IC card 20. Steps S41 to S46 shown in FIG. 8 are similar to Steps S31 to S36 shown in FIG. 6, and will not be explained in detail.

First, the terminal apparatus 10 transmits "command data A" to the IC card 20 (Step S41).

If the "command data A" transmitted from the terminal apparatus 10 is found normally received, the CPU 24 stores the "command data A" in the reception data storage area 27a (Step S42).

The CPU 24 performs a command process based on the "command data A" received, generating "response data A." The transmission/reception interface 23 transmits the "response data A" to the terminal apparatus 10 (Step S43).

If the "response data A" is found normally transmitted, the CPU 24 stores the "response data A." so transmitted, in the transmission data storage area 27b (Step S44).

The terminal apparatus 10 receives the "response data A" transmitted from the IC card 20. Next, the terminal apparatus 10 transmits "command data B" toward the IC card (steep S45).

If the "command data B" transmitted from the terminal apparatus 10 is found normally received, the CPU 24 stores the "command data B," so received, in the reception data storage area 27a (Step S46).

On the basis of the "command data B" received, the CPU 24 performs a command process. From the result of the command process, the CPU 24 generates "response data B." The CPU 24 then stores the "response data B" in the transmission register 23b. The transmission/reception interface 23 transmits, to the terminal apparatus 10, the "response data B" stored in the transmission register 23b (Step S47).

The CPU 24 determines whether the "response data B" has been normally transmitted or not. If the "response data B" is found normally transmitted, the CPU 24 stores the "response data B," so transmitted, in the transmission data storage area 27b (Step S48). As a result, the nonvolatile memory 27 stores the "command data B" and "response data B" in the reception data storage area 27a and transmission data storage area 27b, respectively, as is shown in FIG. 9.

The terminal apparatus 10 may not receive the "response data B" from the IC card 20. Also in this case, the terminal apparatus 10 determines that an error has occurred in the IC card 20.

As described above, the terminal apparatus 10 transmits a state reading command to the IC card 20, reading the data stored in the reception data storage area 27a and transmission data storage area 27b of the IC card 20.

The terminal apparatus 10 determines the state of the IC card 20, from the data stored in the reception data storage area 27a and transmission data storage area 27b. The reception data storage area 27a may hold the "command data B," and the transmission data storage area 27b may hold the "response data B" as shown in FIG. 9. In this case, the terminal apparatus 10 determines that the IC card 20 has performed a command process on the basis of the "command data B" and that the "response data B" has been normally transmitted from the IC card 20. Further, the terminal apparatus 10 determines that a reception error has occurred in it, or that the data transmitted from the IC card 20 has been erased by, for example, noise.

That is, if the last command transmitted to the IC card 20 is stored in the reception data storage area 27a and if the response to the last command transmitted to the IC card 20 is stored in the transmission data storage area 27b, the terminal apparatus 10 can determine that the terminal apparatus 10 could not receive the response transmitted from the IC card 20.

Moreover, the display module 16 can display the decision the terminal apparatus 10 has made. The decision can therefore be notified to the user of the terminal apparatus 10. The terminal apparatus 10 may be configured so that the display 16, for example, may display the data read from the IC card 20. For example, the terminal apparatus 10 is configured to read the data stored in the reception data storage area 27a and transmission data storage area 27b of the IC card 20, and then causes the display 16 to display the reception data and transmission data thus read.

As has been described, the IC card system 1 according to the embodiment comprises the terminal apparatus 10 and the IC card 20. The IC card 20 has the reception data storage area 27a and the transmission data storage area 27b. If the IC card 20 determines that data has been normally exchanged with the terminal apparatus 10, it stores the data in the reception data storage area 27a or the transmission data storage area 27b. Further, if the terminal apparatus 10 determines that an error has occurred, it transmits a state reading command to the IC card 20, thereby reading data from the reception data storage area 27a and transmission data storage area 27b of the IC card 20.

The CPU 11 of the terminal apparatus 10 can therefore determine the state of the IC card 20, from the reception data read from the reception data storage area 27a and the transmission data read from the transmission data storage area 27b. The terminal apparatus 10 can also acquire data to determine the cause of an error. The IC card system 1 according to the embodiment can therefore easily determine the cause of the error made in a series of data items. Thus, the embodiment can provide a portable electronic apparatus in which the cause of an error, if any, can easily be identified, and a system for processing data stored in the portable electronic apparatus.

In the embodiment described above, the nonvolatile memory 27 of the IC card 20 has two storage areas (i.e., reception data storage area and transmission data storage area) for storing transmission data and transmission data, respectively. The IC card 20 is not limited to this configuration. For example, the RAM 26 of the IC card 20 may have the reception data storage area and transmission data storage area. Further, both the RAM 26 and the nonvolatile memory 27 may each have a reception data storage area and a transmission data storage area. Still further, the IC card 20 may further comprises a storage module that has a reception data storage area and a transmission data storage area.

Moreover, the IC card 20 may have a memory (i.e., setting memory) that stores setting data representing a method of storing reception data and transmission data in the reception data storage area and the transmission data storage area, respectively. In this case, the IC card 20 stores the reception data and the transmission data in accordance with the setting data stored in the setting memory.

FIG. 10 shows another exemplary configuration of the IC card 20.

In the IC card 2C shown in FIG. 10, both the RAM 26 and the nonvolatile memory 27 have a reception data storage area 27a and a transmission data storage area 27b. The transmission/reception interface 23, CPU 24, ROM 25, power input module 28, reset signal input module 29 and clock input module 30, all incorporated in the IC card 20 shown in FIG. 10, are identical in configuration to their counterparts shown in FIG. 2, and will not be described in detail.

The RAM comprises a reception data storage area 26a and a transmission data storage area 26b. The nonvolatile memory 27 comprises a reception data storage area 27a and a transmission data storage area 27b. The reception data storage area 26a and the transmission data storage area 26b are similar in configuration to the reception data storage area 27a and the transmission data storage area 27b, respectively.

Nonetheless, since the RAM 26 also has a reception data storage area and a transmission data storage area, the IC card 20 can save the transmission data and reception data faster than the IC card 20 of FIG. 2, in which only the nonvolatile memory 27 has a reception data storage area and a transmission data storage area.

Further, since the nonvolatile memory 27 has a reception data storage area and a transmission data storage area, neither the reception data nor the transmission data is lost even if the power supply of the IC card 20 fails. Hence, the cause of an error, if any, can be more reliably determined than otherwise. In this case, the terminal apparatus 10 can transmit data to the IC card 20, causing the IC card 20 to store the reception data and the transmission data. Thus, the IC card 20 can store the reception data and the transmission data in the same condition as the immediately preceding reception data and transmission data.

Moreover, since both the RAM 26 and the nonvolatile memory 27 have a reception data storage area and a transmission data area, the IC card 20 can store the reception data and the transmission data in the reception data storage area and the transmission data area, respectively, faster and more reliably than otherwise.

As shown in FIG. 10, the nonvolatile memory 27 further has a setting memory 27c storing setting data that represents a method of storing reception data and transmission data in the reception data storage area and the transmission data storage area, respectively. In accordance with the setting data stored in the setting memory 27c, the IC card 20 stores the reception data and transmission data.

The IC card 20 generates setting data on the basis of a command (setting command) transmitted from the terminal apparatus 10. The setting data, thus generated, is stored in the setting memory 27c.

In the IC card 20, the RAM 26 or any other storage module may have a setting memory.

Further, the memory card 20 may have setting data (first setting data) representing a method of storing reception data and transmission data in the reception data storage area 28a and transmission data storage area 27b of the nonvolatile memory 27, respectively, and setting data (second setting data) representing a method of storing reception data and transmission data in the reception data storage area 26a and transmission data storage area 26b of the RAM 26, respectively.

In this case, the IC card 20 may be so configured that the nonvolatile memory 27 has a setting data memory that stores both the first setting data and the second setting data. Then, neither the reception data storage area nor the transmission data storage area needs to be set again even if the power supply fails.

Alternatively, the IC card 20 may be so configured that the RAM 26 has a setting data memory that stores both the first setting data and the second setting data. Then, the IC card 20 can set the reception data storage area and the transmission data storage area at higher speed than otherwise.

Still alternatively, the IC card 20 may be so configured that the nonvolatile memory 27 and the RAM 26 include a setting memory the first setting data and a setting memory storing the second setting data, respectively.

In the IC card 20 of FIG. 10, the nonvolatile memory 27 comprises the reception data storage area 27a, transmission data storage area 27b and setting memory 27c, and the RAM 26 comprises a reception data storage area 26a and a transmission data storage area 26b.

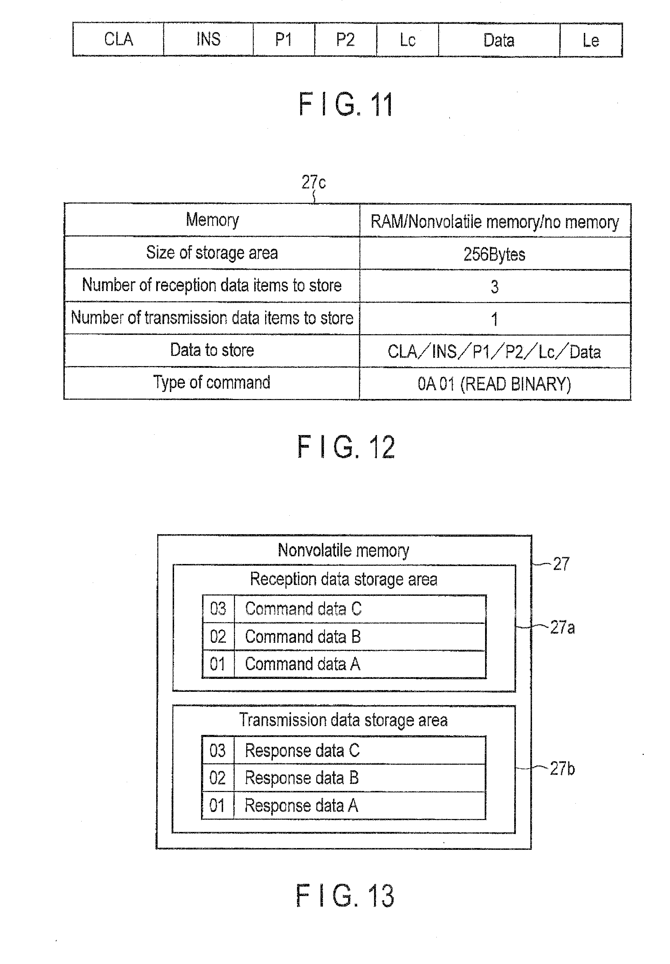

FIG. 11 shows an exemplary command that the terminal apparatus 10 transmits to the 1C card 20.

As shown in FIG. 11, the command the terminal apparatus 10 transmits to the IC card 20 has fields such as "CLA," INS," "PI," "P2," "Lc," data" and "Le."

"CLA" is the class byte representing the layer class of the command. "INS" is the instruction byte representing the type of the command. "P1" and "P2" are the parameter bytes representing the parameters that accord with "INS."

"Lc" is the length field for cording number Nc that represents the length (number of bytes) of "Data." "Data" is the command data field that represents the data proper of the command. "Le" is the length field for cording number that represents the data length of a response to the command.

That is, "CLA" and "INS" specify the type of the command. The IC card 20 analyzes the "CLA" and "INS" of the command it has received, thereby determining the type of the command.

The terminal apparatus 10 generates a setting command for achieving the above-mentioned setting in the 1C card 20, and also a state reading command for reading data from the reception data storage area and transmission data storage area of the IC card 20. The setting command and the state reading command are transmitted to the IC card 20.

If the command shown in FIG. 11 is a setting command, "CLA" and "INS" have data indicating that the command is a setting command. In this case, "Data" contains data representing the storage area in which to save the data, data representing the size of the storage area, data representing the number of reception data items to store, data representing the number of transmission data items to store, data representing the field that should be stored, and data representing the type of the command that should be stored.

When the IC card 20 receives the setting command from the terminal apparatus 10, it generates such setting data as shown in FIG. 12.

The data representing the storage area in which to save the data designates, for example, the storage areas in which the reception data and transmission data should be stored. The data representing the storage area in which to save the data include, for example, data designating the RAM 26, data designating the nonvolatile memory 27, or data instructing to store neither the reception data nor the transmission data.

If the data representing the storage area in which to save the data designates the RAM 26, the IC card 20 generates setting data instructing that the reception data and transmission data should be stored in, respectively, the reception data storage area 26a and transmission data storage area 26b of the RAM 26. If the data designates the nonvolatile memory 27, the IC card 20 generates the item storage area" of the setting data, thereby to store the reception data and transmission data in, respectively, the reception data storage area 27a and transmission data storage area 27b of the nonvolatile memory 27.

This embodiment is based on the assumption that the nonvolatile memory 27 of the IC card 20 is designated as "storage area." Therefore, the reception data and transmission data can be stored in the nonvolatile memory 27 even if the RAM 26 is designated also as "storage area."

If the IC card 20 is so configured, the RAM 26 and the nonvolatile memory 27 can be designated as "storage area." The IC card 20 can therefore process data in the way best possible for the state it now assumes.

The data representing the size of the storage area designates the size of the storage area in which to store the reception data and the transmission data. The IC card 20 secures the storage area designated by the data representing the size of the storage area, in the nonvolatile memory 27. Further, the IC card 20 generates an item "size of the storage area" from the data representing the size of the storage area.

The data representing the number of reception data items to store and the data representing the number of transmission data items to store designate the number of reception data items and the number of transmission data items, all to be stored in the storage areas designated as "storage area." On the basis of this data, the IC card 20 sets the number of reception data items to store and the number of transmission data items, and generates the "number of reception data items to store" and "number of transmission data items to store" of the setting data.

If reception data items are stored in the "number of reception data items to be stored," the IC card 20 writes new reception data over the oldest reception data. If transmission data items are stored, in the "number of transmission data items to store," the IC card 20 writes new transmission data over the oldest transmission data.

The IC card 20 may be configured to set "size of the storage area," "number of reception and transmission data items to store," or "number of transmission data items to store." If the "size of the storage area," for example, is set, the IC card 20 determines, from time to time, the occupied parts of the reception data storage area 27a and transmission data area 27b. If the occupier parts of the reception data storage area 27a and transmission data area 27b are larger than the "size of the storage area" set, the new reception data and new transmission data will be written over, respectively, the stored reception data and the stored transmission data.

With this configuration, the IC card 20 can store a plurality of reception data items and a plurality of transmission data items. The IC card 20 can therefore transmit, to the terminal apparatus 10, data for specifying the cause of the error in more detail.

FIG. 13 shows the nonvolatile memory 27 so set that the "number of reception data items to store" 3 and the "number of transmission data items to store" is also 3. Therefore, the reception data storage area 27a holds three reception data items (command data) and the transmission data storage area 27b holds three transmission data items (response data), as shown in FIG. 13.

To store new reception data (command data D) is stored in the reception data storage area 27a in the state shown in FIG. 13, the command data D is written over the old command data A.

The data representing the fields to store is data that represents the types of the reception data and transmission data that should be stored in the reception data storage area 27b and transmission data storage area 27b, respectively. From the data representing the fields to store, the IC card 20 generates "data items to store" of the setting data.

As described above, the command transmitted from the terminal apparatus 10 to the IC card 20 has fields such as "CLA," INS, " "PI," "P2," "Lc," "Data" and "Le. "

The response transmitted from the IC card 20 to the terminal apparatus 10 has fields such as "Data," "SW1" and "SW2). "Data" is the data proper of the command. "SW1" and "SW2" are fields in which to hold the data representing the result of the process performed in the IC card 20.

The IC card 20 stores, in the reception data storage area 27a, one of the fields "CLA," "INS," "P1," "P2," "Lc," "Data," and "Le" of the command received from the terminal apparatus 10, which is represented by a "data item to store."

Further, the IC card 20 stores, in the transmission data storage area 27b, one of the fields "Data," "SM1" and "SW2" of the response to transmit to the terminal apparatus 10, which is represented by a "data item to store."

With this configuration, the storage capacity for holding the reception data and transmission data can be small. The IC card 20 can therefore utilize the memory more efficiently than otherwise.

The data representing the type of the command is data that designates the type of the command for storing the reception data and transmission data. From the data representing the type of the command to store, the IC card 20 generates the item of "command type" of the setting data.

If the IC card 20 receives the command designated by the "command type," it stores the reception data and the transmission data. The "command type" corresponds to the value of, for example, the fields "CLA" and "INS" of the command. That is, the IC card 20 determines the values of the fields "CLA" and "INS" of the command. If the values determined are identical to the value of the "command type," the reception data and the transmission data will be stored in the reception data storage area 27a and the transmission data storage area 27b, respectively.

Win this configuration, the command for storing the reception data and transmission data can be designated. The IC card 20 can therefore utilize the memory more efficiently than otherwise.

The setting command includes the data representing storage areas, the data representing the size of the storage areas, the data representing the number of reception data items to store, the data representing the number of transmission data items to store, the data representing the fields to store, and the data representing the type of a command to store. Alternatively, the setting command may include any one of these data items.

In the IC card 20, the default setting data is stored in, for example, the nonvolatile memory 27 or the ROM 25. For any item not designated by the setting command, the IC card 20 can refer to the default setting data, thereby to generate the setting data that should be stored in the setting memory 27.

As described above, the setting command has "Data" that includes the data representing storage areas, the data representing the size of the storage areas, the data representing the number of reception data items to store, the data representing the number of transmission data items to store, the data representing the fields to store, and the data representing the type of a command to store. The embodiment is not limited to this configuration, nevertheless. Some of these data items may be included in "P1" and/or "P2."

Moreover, the IC card 20 may be configured to initialize the setting data if it receives a prescribed command (initialization command) from the terminal apparatus 10. Further, the IC card 20 may be configured to set various setting data again if it receives the setting command after it has initialized the setting data, or to initialize the setting data when it is activated.

If the command shown in FIG. 11 is a state reading command of the type described above, "CLA" and "INS" have data showing that the command is a state reading command. In this case, "Data" has data that designates a method of reading data.

"Data" has, for example, data instructing the IC card 20 to read the reception data and the transmission data at a time, data instructing the IC card 20 to read only the reception data, the data instruction the IC card 20 to read only the transmission data, data instructing the IC card 20 to read the reception data and transmission data, one by one, or data instructing the IC card 20 to read reception data, and transmission data, in units of a designated number of items.

"Data" may have the data instructing the IC card 20 to read the reception data and the transmission data at a time. In this case, the IC card 20 reads all reception data stored in the reception data storage area 27a and all transmission data stored in the transmission data storage area 27b, and generates a response including the data thus read. The IC card 20 transmits the response to the terminal apparatus 10.

"Data" may have the data instructing the IC card 20 to read only the reception data. In this case, the IC card 20 reads all reception data stored in the reception data storage area 27a, and generates a response including the reception data thus read. The IC card 20 transmits this response to the terminal apparatus 10.

"Data" may have the data instructing the IC card 20 to read only the transmission data. In this case, the IC card 20 reads all transmission data stored in the transmission data storage area 27b, and generates a response including the transmission data thus read. The IC card 20 transmits this response to the terminal apparatus 10.

"Data" may have the data instructing the IC card 20 to read the reception data and transmission data, one by one. In this case, the IC card 20 reads the reception data stored in the reception data storage area 27a and the transmission data stored in the transmission data storage area 27b, one by one, and then generates a response including the data thus read. The IC card 20 transmits the response to the terminal apparatus 10.

"Data" may have the data instructing the IC card 20 to read the reception data and transmission data, in units of a designated number of items. Then, the IC card 20 reads the reception data stored in the reception data storage area 27a and the transmission data stored in the transmission data storage area 27b, in units of a designated number of items, and generates a response including the data thus read. The IC card 20 transmits the response to the terminal apparatus 10. In this case, "Data" has the data representing the number (designated number) of reception data items to read, and also the number (designated number) of transmission data items to read.

As has been described, the IC card 20 reads the reception data and transmission data, respectively from the reception data storage area 27a and transmission data storage area 27b, by a method designated by the terminal apparatus 10, and can then generate responses. The IC card 20 can therefore read data from the reception data storage area 27a and transmission data storage area 27b and transmit them to the terminal apparatus 10, without performing any other processes. Thus, the IC card 20 can perform processes at higher efficiency than otherwise.

In the embodiment described above, "Data" of the state reading command has the data instructing the IC card 20 to read the reception data and the transmission data at a time, the data instructing the IC card 20 to read only the reception data, the data instruction the IC card 20 to read only the transmission data, the data instructing the IC card 20 to read the reception data and transmission data, one by one, or the data instructing the IC card 20 to read reception data, and transmission data, in units of a designated number of items. The embodiment is not limited to this configuration, nevertheless.

Instead, the values of "P1" and "P2" included in the state reading command may have values that define the data instructing the IC card 20 to read the reception data and the transmission data at a time, the data instructing the IC card 20 to read only the reception data, the data instruction the IC card 20 to read only the transmission data, the data instructing the IC card 20 to read the reception data and transmission data, one by one, or the data instructing the IC card 20 to read reception data, and transmission data, in units of a designated number of items.

Functions described in the above embodiment may be constituted not only with use of hardware but also with use of software, for example, by making a computer read a program which describes the functions. Alternatively, the functions each may be constituted by appropriately selecting either software or hardware.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions, The accompanying claims and their equivalents are intended to cover such forms or modifications as would fall within the scope and spirit of the inventions.

## Claims

1. A portable electronic apparatus configured to operate in response to command input from an external apparatus, the electronic apparatus **characterized by** comprising:
a receiving module (23) configured to receive a command input from the external apparatus;
a reception register (23a) configured to temporarily store the command received by the receiving module;
a first storage module (27a) configured to determine whether the receiving module has received the command normally, and to store the command as reception data if the command is found to have been received normally;
a command processing module (24) configured to process based on the command stored in the reception register, thereby to generate a response;
a transmission register (23b) configured to temporarily store the response which transmits to the external apparatus generated by the command processing module;
a transmitting module (23) configured to transmit the response stored in the transmission register, to the external apparatus; and
a second storage module (27b) configure to determine whether the transmitting module has transmitted the response normally, and to store the response as transmission data if the response is found to have been transmitted normally.

2. The portable electronic apparatus according to claim 1, **characterized in that** the first storage module configured to store the command as reception data if the command is a command of a preset type and if the command is found to have been received normally; and
the second storage module configured to store the response as transmission data if the command is a command of the preset type and if the response is found to have been received normally.

3. The portable electronic apparatus according to claim 1 or 2, **characterized in that** the first storage module configured to store a preset field of the command, as reception data, if the command is found to have been received normally.

4. The portable electronic apparatus according to claim 3, **characterized in that** the second storage module configured to store a preset field of the responses, as transmission data, if the response is found to have been transmitted normally.

5. The portable electronic apparatus according to one of claims 1 to 4, **characterized in that** if the command is found to have been received normally, the first storage module configured to determine whether a preset number of reception data items are stored, to write new reception data over the oldest reception data if the preset number of reception data items are found to have been stored, and to additionally write the reception data if the preset number of reception data items are found not to have been stored; and if the response is found to have been received normally,
the second storage module configured to determine whether a preset number of transmission data items are stored, to write new transmission data over the oldest transmission data if the preset number of transmission data items are found to have been stored, and to additionally write the transmission data if the present number of transmission data items are found not to have been stored.

6. The portable electronic apparatus according to one of claims 1 to 5, **characterized in that** if the command is found to have been received normally, the first storage module configured to determine whether a vacant storage area exists, to write new reception data over the oldest reception data if no vacant area is found to exist, and to additionally write the reception data if the vacant storage area is found to exist; and if the response is found to have been transmitted normally,
the second storage module configured to determine whether a vacant storage area exists, to write new reception data over the oldest reception data if no vacant storage area is found to exist, and to additionally write the transmission data if a vacant storage area is found to exist.

7. The portable electronic apparatus according to one of claims 1 to 6, **characterized by** further comprising:
a volatile memory (23a, 23b) configured to store data temporarily; and
a nonvolatile memory (27) configured to store data at all times,
wherein the first storage module configured to store the reception data in the volatile memory or the nonvolatile memory, or in both, in accordance with prescribed setting data; and
the second storage module configured to store the transmission data in the volatile memory or the nonvolatile memory, or in both, in accordance with a prescribed setting data.

8. The portable electronic apparatus according to one of claims 1 to 7, **characterized in that** if the receiving module receives a state reading command for reading the reception data and transmission data stored in the first storage module and the second storage module, respectively, the command processing module configured to read the reception data and transmission data stored in the first storage module and the second storage module, respectively, and to generate a response containing the reception data and transmission data so read.

9. The portable electronic apparatus according to claim 8, **characterized in that**, on receiving the state reading command, the command processing module configured to read all reception data stored in the first storage module and all transmission data stored in the second storage module and to generate a response containing the reception data and transmission data so read.

10. The portable electronic apparatus according to claim 8 or 9, **characterized in that**, on receiving the state reading command, the command processing module configured to read all reception data stored in the first storage module and to generate a response containing the reception data so read.

11. The portable electronic apparatus according to one of claims 8 to 10, **characterized in that**, on receiving the state reading command, the command processing module configured to read all transmission data stored in the second storage module and to generate a response containing the transmission data so read.

12. The portable electronic apparatus according to one of claims 8 to 11, **characterized in that**, on receiving the state reading command, the command processing module configured to read, one by one, the reception data and transmission data stored in the first storage module and second storage module, respectively, and to generate a response containing the reception data and transmission data so read.

13. The portable electronic apparatus according to one of claims 8 to 12, **characterized in that**, on receiving the state reading command, the command processing module configured to read the reception data and transmission data stored in the first storage module and second storage module, respectively, in a number of data items designated by the state reading command, and to generate a response containing the reception data and transmission data so read.

14. The portable electronic apparatus according to one of claims 1 to 13, **characterized by** comprising:
an IC module (21) configured to include the modules and the registers; and
a main unit (20) incorporating the IC module.
